# EUROPEAN PATENT APPLICATION

(11) **EP 2 975 566 A1**
(43) Date of publication of application: **20.01.2016**
(21) Application number: 15177072.4
(22) Date of filing: 16.07.2015
(51) Int. Cl.: G06Q 10/10

(54) **SERVICE REGISTRATION UPDATING METHOD, DEVICE, SERVER AND CLIENT SIDE**

(30) Priority: 16.07.2014 CN 201410340318
(71) Applicant: Xiaomi Inc., Beijing 100085 (CN)
(72) Inventor: GAO, Yi, 100085 BEIJING (CN); WANG, Hongqiang, 100085 BEIJING (CN); LONG, Hai, 100085 BEIJING (CN)
(74) Representative: Delumeau, François Guy

(57) **Abstract**

The present disclosure relates to a service registration updating method, a device, a server and a client side. The service registration updating method is on a server side and includes: receiving (S110) a first service registration updating request from a client side; acquiring (S112) services registered by a first communication identification of the client side; and updating (S114) registration information of service by using a second communication identification of the client side.

## Description

### TECHNICAL FIELD

The present disclosure generally relates to the field of Internet, and more particularly, to a service registration updating method, a device, a server and a client side.

### BACKGROUND

At present, users generally need to use communication identification (for example, cell phone number) for registration when they use services provided by websites or some institutions. It is difficult for users to memorize names of these service institutions if the used services are gradually increased. Particularly, new communication identifications are required for re-registration one by one if users change new communication identifications, which is very cumbersome in operation.

### SUMMARY

In order to overcome problems in related technologies, the present disclosure provides a service registration updating method, device, server and client side.

According to the first aspect, the invention relates to a service registration updating method on a server side, comprising: receiving a first service registration updating request from a client side; acquiring services registered with a first communication identification of the client side; and updating registration information of service by using a second communication identification of the client side.

Optionally, the step of acquiring services registered by a first communication identification of the client side may comprise: querying and acquiring a registration service list stored locally and corresponding to the first communication identification by using the first communication identification; the registration service list comprising services acquired from service registration messages received from the client side by means of the first communication identification and synchronized with the server side.

Optionally, the step of updating registration information of the services by using a second communication identification of the client side may comprise: sending the registration service list to the client side.

Optionally, the step of updating registration information of service by using a second communication identification of the client side may also comprise: screening out, from the registration service list, services available for directly executing service registration updating; sending a second service registration updating request to providers of the screened out services, the second service registration updating request carrying the second communication identification; and sending a registration service list comprising no service screened out to the client side.

Optionally, the step of screening out, from the registration service list, services available for directly executing service registration updating comprises: obtaining the type of each service in the registration service list beginning from a first service in the registration service list; screening out services with types indicating available for directly executing service registration updating; and wherein the types are marked according to note information by the client side on the service registration message when services are acquired from service registration messages received from the client side by means of the first communication identification and synchronized with the server side.

Further optionally, the screening out services available for directly executing service registration updating from the registration service list comprises: obtaining providers of each service in the registration service list beginning from the first service in the registration service list; and screening out services corresponding to providers in a list being available for directly executing service registration updating.

Optionally, the step of updating registration information of service by using a second communication identification of the client side may also comprise: sending a request confirmation notice to the client side, the request confirmation notice prompting that the service registration updating of the services available for directly executing service registration updating will be executed; receiving a confirmation instruction on the request confirmation notice from the client side; and executing, after receiving the confirmation instruction, the step of sending a second service registration updating request to providers of the services screened out.

According to a second aspect, the invention relates to a service registration updating method on a client side, comprising: monitoring a trigger event for service registration updating; sending a first service registration updating request to a server; receiving from the server a registration service list, in which services corresponding to service registration messages received from the client side by means of a first communication identification and synchronized with the server are recorded; and sending a second service registration updating request to providers of the services recorded in the registration service list, the second service registration updating request carrying a second communication identification of the client side.

Optionally, the step of sending a second service registration updating request to providers of the services recorded in the registration service list comprises: presenting a registration service list; receiving an execution instruction inputted by users; and sending a second service registration updating request to the providers of services recorded in the registration service list.

Optionally, the method further comprises: receiving a request confirmation notice from the server, the request confirmation notice prompting that the server will execute service registration updating of services available for directly executing service registration updating; and sending a confirmation instruction of the request confirmation notice to the server.

Optionally, the method may also comprise: receiving messages by means of the first communication identification; selecting a message recording services from the messages as a service registration message; and synchronizing the service registration message with the server by using the first communication identification.

According to a third aspect, the invention relates to a service registration updating device on a server side, comprising: a receiving module, configured to receive a first service registration updating request from a client side; an acquisition module, configured to acquire services registered with a first communication identification of the client side; and an update module, configured to update registration information of service by using a second communication identification of the client side.

Optionally, the acquisition module is configured to query and acquire a registration service list stored locally and corresponding to the first communication identification by using the first communication identification; the registration service list comprising services acquired from service registration messages received from the client side by means of the first communication identification and synchronized with the server side.

Optionally, the update module is configured to send the registration service list to the client side.

Optionally, the update module comprises: a screening submodule, configured to screen out services available for directly executing service registration updating from the registration service list; a first sending submodule, configured to send a second service registration updating request to a provider of the screened out services, the second service registration updating request carrying the second communication identification; and a second sending submodule, configured to send a registration service list comprising no service screened out to the client side.

Optionally, the screening submodule is configured to traverse the type of each service in the registration service list beginning from the first service in the registration service list, screen out the services with types indicating available for directly executing service registration updating; and wherein the type is marked according to note information by the client side on the service registration message when services are acquired from service registration messages received from the client side by means of the first communication identification and synchronized with the server side.

Optionally, the screening submodule is configured to traverse providers of each service in the registration service list beginning from the first service in the registration service list, and screen out services corresponding to providers in a list being available for directly executing service registration updating.

Optionally, the update module also comprises: a trigger submodule, configured to: send a request confirmation notice to the client side; receive a confirmation instruction on the request confirmation notice from the client side; and trigger the second sending submodule to execute operation after receiving the confirmation instruction; wherein, the request confirmation notice prompts that the service registration updating of the services available for directly executing service registration updating will be executed.

According to a fourth aspect, the invention relates to a service registration updating device on a client side, comprising: a monitoring module, configured to monitor a trigger event for service registration updating; a first sending module, configured to send a first service registration updating request to a server; a receiving module, configured to receive from the server a registration service list, in which services corresponding to service registration messages received from the client side by means of a first communication identification and synchronized with the server are recorded; and a second sending module, configured to send a second service registration updating request to providers of services recorded in the registration service list, the second service registration updating request carrying a second communication identification of the client side.

Optionally, the second sending module comprises: a presentation submodule, configured to present the registration service list; a receiving submodule, configured to receive execution instruction inputted by users; and an execution submodule, configured to send, after the execution instruction is received by the receiving submodule, a second service registration updating request to providers of services recorded in the registration service list.

Optionally, the device further comprises: a notice receiving module, configured to receive a request confirmation notice from a server, the request confirmation notice prompting that the server will execute service registration updating of services available for directly executing service registration updating; and a confirmation sending module, configured to send a confirmation instruction of the request confirmation notice to the server.

Optionally, the device further comprises: a message receiving module, configured to receive messages by means of the first communication identification; a selection module, configured to select a message having recorded services from the messages as a service registration message; and a synchronization module, configured to synchronize the service registration message with the server by using the first communication identification.

According to a fifth aspect, the invention relates to a server comprising: a processor; and a memory configured to store instructions executable by the processor; wherein, the processor is configured to: receive a first service registration updating request from the client side; acquire services registered by a first communication identification of the client side; and update service registration information by using a second communication identification of the client side.

According to a sixth aspect, the invention relates to a client side comprising: a processor; and a memory configured to store instructions executable by the processor; wherein, the processor is configured to: monitor a trigger event for service registration updating; send a first service registration updating request to a server; receive from the server a registration service list, in which services corresponding to service registration messages received from the client side by means of a first communication identification and synchronized with the server are recorded; and send a second service registration updating request to providers of services recorded in the registration service list, the second service registration updating request carrying a second communication identification of the client side.

Optionally, the steps of the service registration updating method are determined by computer program instructions.

Consequently, according to a sixth aspect, the invention relates to a computer program for executing the steps of a service registration updating method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present disclosure may have the following beneficial effect of ensuring users to relatively easily update registered services after changing communication identification, which improves user experience.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a registration updating method according to an exemplary embodiment.
Fig. 2 is a flow chart showing a registration updating method according to an exemplary embodiment.
Fig. 3 is a flow chart showing a registration updating method according to an exemplary embodiment.
Fig. 4 is a flow chart showing a registration updating method according to an exemplary embodiment.
Fig. 5 is a schematic diagram showing a registration updating device according to an exemplary embodiment.
Fig. 6 is a schematic diagram showing a registration updating device according to an exemplary embodiment.
Fig. 7 is a schematic diagram showing a server according to an exemplary embodiment.
Fig. 8 is a schematic diagram showing a client side according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

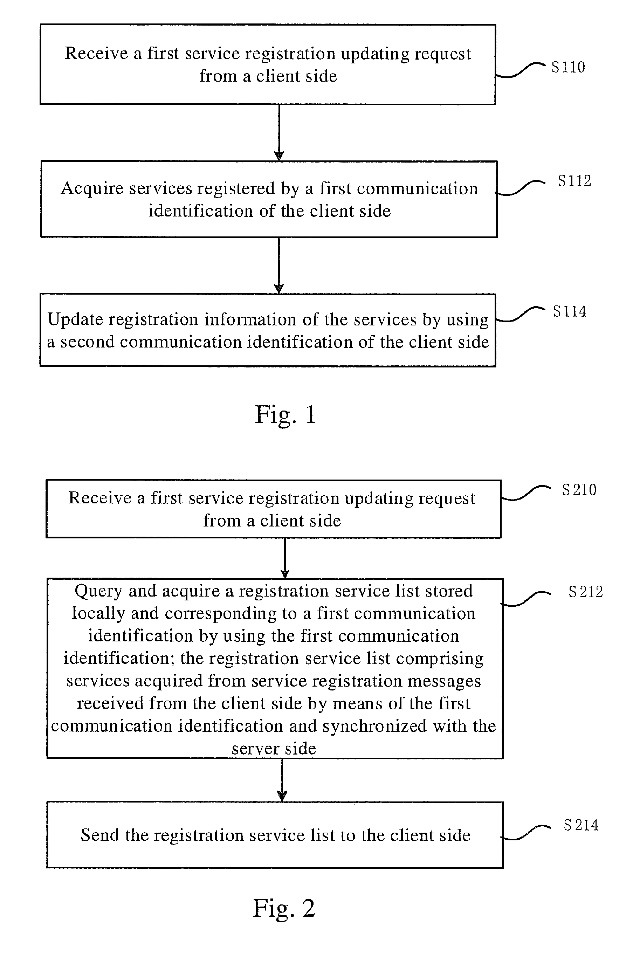

Fig. 1 is a flow chart showing a registration updating method according to an exemplary embodiment, the registration updating method being implemented on a server side, and including the following steps.

In step S110, a first service registration updating request is received from a client side.

In step S112, services registered with a first communication identification of the client side are acquired.

In step S114, a registration information of the services is updated by using a second communication identification of the client side.

For example, the first communication identification may be a number of a user's old mobile phone, the second communication identification may be a number of a user's new mobile phone, and the client side may be either a user's mobile phone, or a smart product such as a PC or a tablet computer. In the embodiment, users may relatively easily update registered services after changing communication identification, which improves user experience.

As an optional implementing manner, step S112 may comprise: querying and acquiring a registration service list stored locally and corresponding to a first communication identification by using the first communication identification; the registration service list includes services acquired from service registration messages received from the client side by means of the first communication identification and synchronized with the server side.

At present, in order to use services, users generally need to use a cell phone number for registration to a service provider, who usually provides users with a service registration message, which may carry a verification code or may just indicate that the registration successful, with a concrete form not limited herein. For example, the service registration message herein may be a short message for service registration.

Fig. 2 is a flow chart showing a registration updating method according to an exemplary embodiment, the registration updating method being implemented on a server side, and including the following steps.

In step S210, a first service registration updating request is received from a client side.

In step S212, a registration service list stored locally and corresponding to a first communication identification is queried and acquired by using the first communication identification; the registration service list comprising services acquired from service registration messages received from the client side by means of the first communication identification and synchronized with the server side.

After users use certain services by using communication identification registration, the received messages such as verification codes and information notices are analyzed by a client side used by users. These messages may be determined as service registration messages because they are associated with services provided by some institutions through user communication identification and even used as registration ID. The client side used by users may synchronize service registration messages with a server, which may acquire services from the service registration messages and add services into the registration service list.

In step S214, the registration service list is sent to the client side.

In the embodiment, when a client side has demanded a service registration updating, a server will sort out a registration service list required for the client side and send it to the client side so that the client side may execute service registration updating according to the registration service list provided by the server, saving for users to conduct themselves the step of searching for and sorting out services in need of executing service registration updating. The user operation is thus simplified.

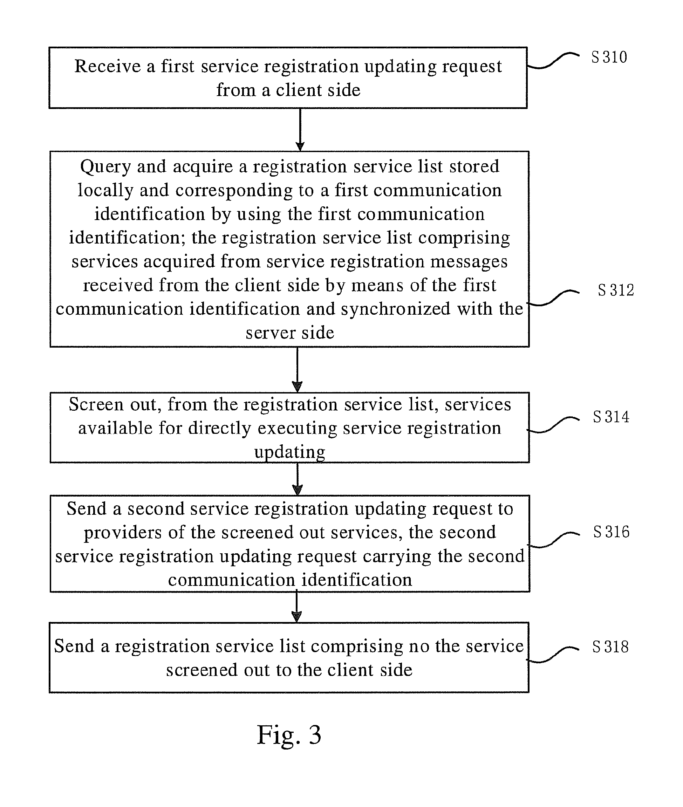

Fig. 3 is a flow chart showing a registration updating method according to an exemplary embodiment, the registration updating method being implemented on a server side, and including following steps.

In step S310, a first service registration updating request is received from a client side.

In step S312, a registration service list stored locally and corresponding to a first communication identification is queried and acquired by using the first communication identification; the registration service list comprising services acquired from service registration messages received from the client side by means of the first communication identification and synchronized with the server side.

After users use certain services by using communication identification registration, the received messages such as verification codes and information notices are analyzed by a client side used by users. These messages may be determined as service registration messages because they are associated with services provided by some institutions through user communication identification and even used as registration ID. The client side used by users may synchronize service registration messages with a server, which may acquire services from the service registration messages and add services into a registration service list.

In step S314, services available for directly executing service registration updating are screened out from the registration service list.

As an optional implementing manner, the step of screening out, from the registration service list, services available for directly executing service registration updating may include following substeps.

In substep 1, the type of each service in the registration service list is traversed beginning from the first service in the registration service list.

In substep 2, services with types indicating "available for directly executing service registration updating" are screened out.

The type may be marked by the client side according to note information (or remark information) on the service registration message when services are acquired by the server from service registration messages received from the client side by means of the first communication identification and synchronized with the server side. For example, in a certain service registration message, the remark information of the client side is "Alipay". As it is involved with personal privacy information relating to financial affairs, this service registration message may be labeled as "unavailable for directly executing service registration updating", i.e., users need to execute service registration updating by themselves. For another example, in a certain service registration message, the remark information of the client side is "general information retrieval organization". As it is not involved with any privacy information, this service registration message may be labeled as "available for directly executing service registration updating", i.e., the server may directly execute service registration updating for users. It may be preset that what type of rules is labeled on the basis of what kind of remark information.

As another optional implementing manner, the screening out, from the registration service list of services available for directly executing service registration updating may comprise following substeps.

In substep 1', providers of each service in the registration service list are traversed beginning from the first service in the registration service list.

In substep 2', services corresponding to providers in the list available for directly executing service registration updating are screened out.

Under the circumstances, the client side may not make remark information when in synchronizing service registration message. If the client side needs service registration updating, the server may analyze providers of each service by itself, and then query providers from a preset list as being available for directly executing service registration updating. If a provider of a certain service is listed in the list, this service is available for directly executing service registration updating, i.e., users does not need to execute service registration updating by themselves.

In Step S316, a second service registration updating request is sent to providers of the services screened out, and the second service registration updating request carries the second communication identification.

In Step S318, a registration service list comprising no the service screened out is sent to the client side.

In Step S318, as an optional implementing manner, a request confirmation notice is sent to the client side, the request confirmation notice prompting that the server will execute service registration updating of services available for directly executing service registration updating; after a confirmation instruction on the request confirmation notice from the client side is received, the step of sending a second service registration updating request to providers of the services screened out is executed.

In the embodiment, when a client side has demanded a service registration updating, the client side differentiates types of services, wherein a part of services may be subject to service registration updating directly by the server, while the other part of services are sent to the client side by means of a registration service list so that the client side may execute service registration updating according to the registration service list provided by the server, saving for users to conduct themselves the step of searching for and sorting out services in need of executing service registration updating. Also a part of services may be directly sent by the client side to the server for executing service registration updating. The user operation is thus simplified.

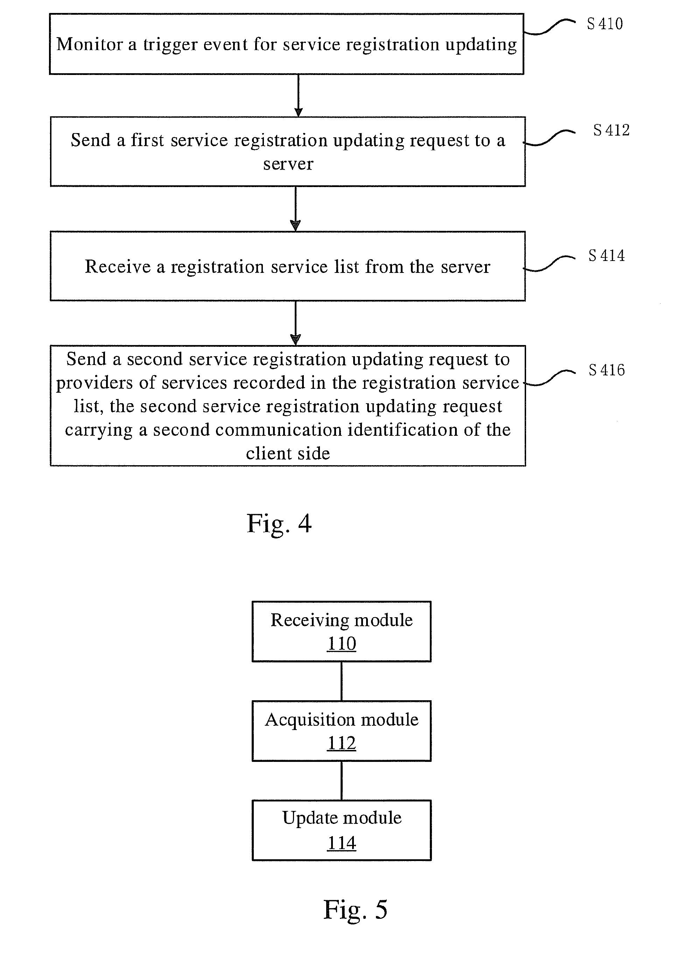

Fig. 4 is a flow chart showing a registration updating method according to an exemplary embodiment, the method is on a client side, including following steps.

In step S410, a trigger event for service registration updating is monitored.

In step S412, a first service registration updating request is sent to a server.

In step S414, a registration service list from the server is received.

In the registration service list, services corresponding to service registration messages received from the client side by means of a first communication identification and synchronized with the server are recorded.

In step S416, a second service registration updating request is sent to providers of services recorded in the registration service list, and the second service registration updating request carries a second communication identification of the client side.

For example, the first communication identification may be a number of a user's old mobile phone, the second communication identification may be a number of a user's new mobile phone, and the client side may be either a user's mobile phone, or a smart product such as a PC or a tablet computer. In the embodiment, users may relatively easily update registered services after changing communication identification, thus improving user experience.

As an optional implementing manner, when the second service registration updating request is sent to providers of services recorded in a registration service list, the registration service list is presented to users, and an execution instruction inputted by users is received; users may select, on the registration service list presented, services to be executed service registration updating. After the execution instruction is received, a second service registration updating request is sent to providers of services recorded in the registration service list.

In the embodiment, users may quickly and clearly query, from a registration service list received by the client side, services in need of registration updating. It is no longer needed to browse a short message list item by item, and the user experience is thus improved. For example, after users change communication identification, it is easy to uniformly re-register services registered in old communication identification. The user experience is thus improved.

As an optional implementing manner, the embodiment may also comprise: receiving a request confirmation notice from a server, the request confirmation notice prompting that the server will execute service registration updating of services available for directly executing service registration updating; and sending a confirmation instruction of the request confirmation notice to the server.

In the embodiment, automatic registration of services saving for users to conduct themselves manual registration may be completed by the server upon user authorization, which further reduces workload of uniform re-registration after users change communication identification, thus greatly improving user experience.

As an optional implementing manner, the method may also comprise: receiving messages by means of the first communication identification; selecting a message having recorded therein services from the messages as a service registration message; and synchronizing the service registration message with the server by using the first communication identification.

Fig. 5 is a schematic diagram showing a service registration updating device according to another exemplary embodiment, the device being on a server side, and comprising:
a receiving module 110, configured to receive a first service registration updating request from a client side;
an acquisition module 112, configured to acquire services registered with a first communication identification of the client side; and
an update module 114, configured to update registration information of the services by using a second communication identification of the client side.

For example, the first communication identification may be a number of a user's old mobile phone, the second communication identification may be a number of a user's new mobile phone, and the client side may be either a user's mobile phone, or a smart product such as a PC or a tablet computer. In the embodiment, users may relatively easily update registered services after changing communication identification, which improves user experience.

As an optional implementing manner, the acquisition module 112 is configured to query and acquire a registration service list stored locally and corresponding to the first communication identification by using the first communication identification; the registration service list comprising services acquired from service registration messages received from the client side by means of the first communication identification and synchronized with the server side.

On this basis, the update module 114 is configured to send the registration service list to the client side.

In the embodiment, when a client side has demanded a service registration updating, a server will sort out a registration service list required for the client side and send it to the client side so that the client side may execute service registration updating according to the registration service list provided by the server, saving for users to conduct themselves the step of searching for and sorting out services in need of executing service registration updating, thus simplifying user operation. For example, after users change communication identification, it is easy to uniformly re-register services registered in old communication identification, which improves user experience.

As an optional implementing manner, the acquisition module 112 is configured to query and acquire a registration service list stored locally and corresponding to the first communication identification by using the first communication identification; the registration service list comprises services acquired from service registration messages received from the client side by means of the first communication identification and synchronized with the server side.

On this basis, the update module 114 may comprise: a screening submodule, a first sending submodule and a second sending submodule.

The screening submodule is configured to screen out services available for directly executing service registration updating from the registration service list.

The first sending submodule is configured to send a second service registration updating request to providers of the services screened out, the second service registration updating request carrying the second communication identification.

The second sending submodule is configured to send a registration service list comprising no service screened out to the client side.

Further, the screening submodule is configured to traverse the type of each service in the registration service list beginning from the first service in the registration service list; and screen out services types which indicate "available for directly executing service registration updating".

Or further, the screening submodule is configured to traverse providers of each service in the registration service list beginning from the first service in the registration service list, and screen out services corresponding to providers in the list available for directly executing service registration updating.

Or further, the update module also comprises: a trigger submodule, configured to: send a request confirmation notice to the client side; receive a confirmation instruction of the client side on the request confirmation notice; and trigger the second sending submodule to execute operation after receiving the confirmation instruction. The request confirmation notice prompts that service registration updating of the services available for directly executing service registration updating will be executed.

Therefore, registration services relating to registered short messages are classified herein. Only those services compulsory for manual registration are added into a registration service list and presented to users, then users need manually complete concrete registration updating operation themselves. As for those services available for directly requesting updating registration by a server, registration updating requests are directly sent by the server to service organizations. In this way, the registration service list is simplified, and services required for registration updating by users manually are reduced, which further improves user experience.

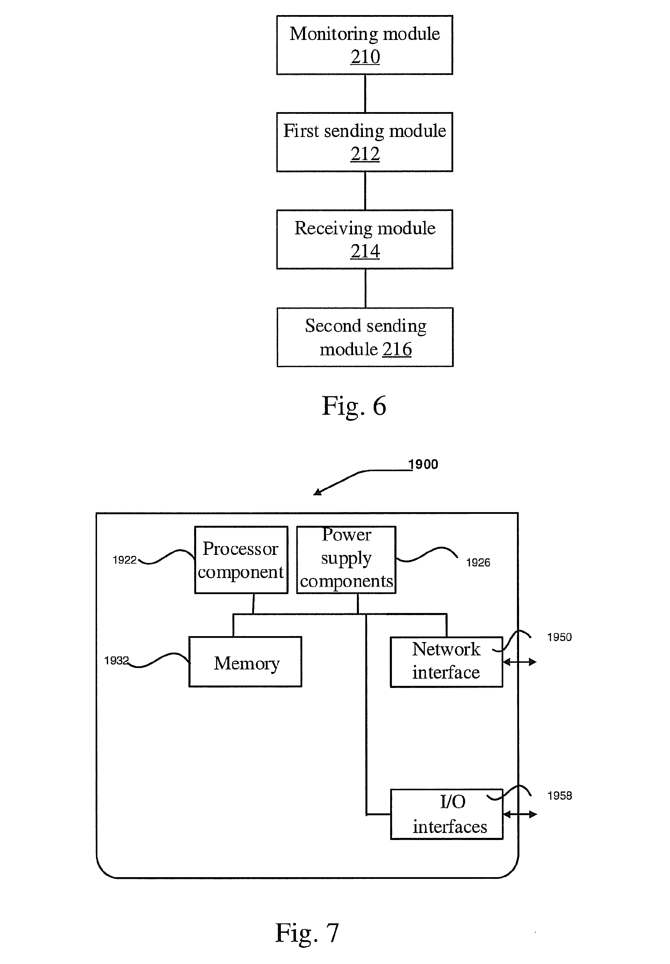

Fig. 6 is a schematic diagram showing a service registration updating device according to an exemplary embodiment, the device is on a client side, comprising:
a monitoring module 210, configured to monitor a trigger event for service registration updating;
a first sending module 212, configured to send a first service registration updating request to a server;
a receiving module 214, configured to receive from the server a registration service list, in which services corresponding to service registration messages received from the client side by means of a first communication identification and synchronized with the server are recorded; and
a second sending module 216, configured to send a second service registration updating request to providers of services recorded in the registration service list, the second service registration updating request carrying a second communication identification of the client side.

In the embodiment, users may relatively easily update registered services after changing communication identification, thus improving user experience.

As an optional implementing manner, the second sending module 216 may comprise: a presentation submodule, a receiving submodule and an execution submodule.

The presentation submodule is configured to present the registration service list.

The receiving submodule is configured to receive execution instruction inputted by users.

The execution submodule is configured to send, after the execution instruction is received by the receiving submodule, a second service registration updating request to providers of services recorded in the registration service list.

As another optional implementing manner, the device may also comprise: a notice receiving module, configured to receive a request confirmation notice from a server, the request confirmation notice prompting that the server will execute service registration updating of services available for directly executing service registration updating; and a confirmation sending module, configured to send a confirmation instruction of the request confirmation notice to the server.

In the optional implementing manner, automatic registration of services saving for users to conduct themselves manual registration may be completed by the server upon user authorization, which further reduces workload of uniform re-registration after users change communication identification, thus greatly improving user experience.

As a third optional implementing manner, the device may also include: a message receiving module, configured to receive messages by means of the first communication identification; a selection module, configured to select, from the messages a message having recorded services as a service registration message; and a synchronization module, configured to synchronize the service registration message with the server by using the first communication identification.

Fig. 7 is a block diagram showing a server according to an exemplary embodiment. Referring to Fig. 7, a server 1900 includes a processor component 1922, and further includes one or a plurality of processors, and memory resource represented by a memory 1932 and configured to store instructions that can be executed by the processor component 1922, for example, application program. The application program stored in the memory 1932 may include one or a plurality of modules each of which is corresponding to a set of instructions. In addition, the processor component 1922 is configured to execute instructions so as to execute the foregoing method of the server side.

The server 1900 may also include one or a plurality of power supply components 1926 configured to execute the power management of the server 1900, one or a plurality of wired or wireless network interface 1950 configured to connect the device 1900 to the network, and one or a plurality of input/output (I/O) interfaces 1958, one or a plurality of keyboards 1956, and/or one or a plurality of operating systems 1941. The server 1900 may operate an operating system based on and stored in the memory 1932, for example, Windows ServerTM, Mac OS XTM, UnixTM, LinuxTM, FreeBSDTM or other similar operating systems.

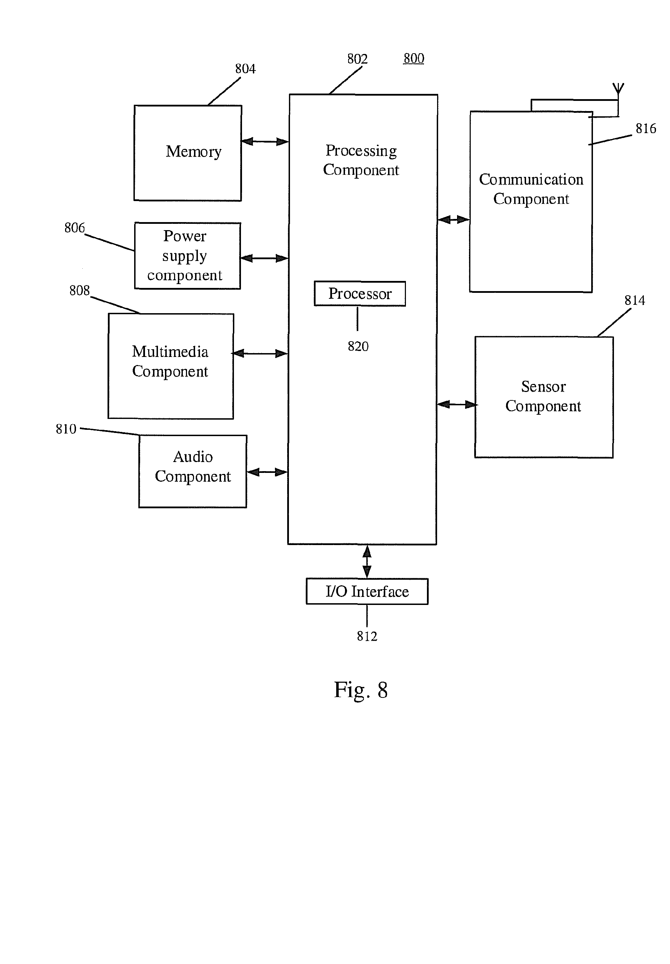

Fig. 8 is a block diagram showing a client side according to an exemplary embodiment. For example, the client side 800 may be a mobile telephone, a computer, a digital broadcasting terminal, a message transceiver device, a games console, a tablet device, a medical device, a fitness facility, a PDA (personal digital assistant) and the like.

Referring to Fig. 8, the client side 800 may include one or a plurality of components:
a processor component 802, a memory 804, a power supply component 806, a multimedia component 808, an audio component 810, an input/output (I/O) interface 812, a sensor component 814 and a communication component 816.

The processor component 802 usually controls the overall operation of the client side 800, for example, display, telephone call, data communication, and operation associated with camera operation and record operation. The processor component 802 may include one or a plurality of processors 820 for executing instructions so as to complete steps of the method of the above client side in part or in whole. In addition, the processor component 802 may include one or a plurality of modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include any application program or approach directive for operation of the client side 800, including contact data, phonebook data, message, picture and video, etc. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the client side 800. The power supply component 806 may include a power management system, one or a plurality of power supplies, and other components associated with generation, management and power distribution of the client side 800.

The multimedia component 808 includes a screen between the client side 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the client side 800 is under an operation mode such as a call mode, a record mode and a speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface for the processor component 802 and peripheral interface modules, the peripheral interface modules may be a keyboard, a click wheel and buttons, etc. These buttons may include but not limited to:
a home button, a volume button, a start button and a locking button.

The sensor component 814 includes one or a plurality of sensors for providing the client side 800 with state evaluation from all aspects. For example, the sensor component 814 may detect the on/off state of the device 800, relative positioning of components, for example, the components are the displayer and keypads of the client side 800; the sensor component 814 also may detect the position change of the client side 800 or a component thereof, the presence or absence of users' touch on the client side 800, the direction or acceleration/deceleration of the client side 800, and temperature variation of the client side 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the client side 800 and other equipment. The client side 800 is available for access to wireless network based on communication standards such as WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the client side 800 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, above instructions may be executed by the processors 820 of the client side 800 so as to achieve the method of the above client side. For example, the non-transitory computer-readable storage medium may be ROM, random access memory (RAM), CD-ROM, magnetic tape, floppy disk and optical data storage device, etc.

The embodiments of the present disclosure provide a communication system, including the foregoing server and the client side.

## Claims

1. A service registration updating method on a server side, comprising:
receiving (S110, S210, S310) a first service registration updating request from a client side;
acquiring (S112) services registered with a first communication identification of the client side; and
updating (S114) registration information of the services by using a second communication identification of the client side.

2. The method according to claim 1, wherein the step (S112) of acquiring services registered with a first communication identification of the client side comprises:
querying and acquiring (S212, S312) a registration service list stored locally and corresponding to the first communication identification by using the first communication identification; the registration service list comprising services acquired from service registration messages received from the client side by means of the first communication identification and synchronized with the server side.

3. The method according to claim 2, wherein the step (S114) of updating registration information of the services by using a second communication identification of the client side comprises:
sending (S214) the registration service list to the client side.

4. The method according to claim 2, wherein the step (S114) of updating registration information of the services by using a second communication identification of the client side comprises:
screening out (S314), from the registration service list, services available for directly executing service registration updating;
sending (S316) a second service registration updating request to providers of the screened out services, the second service registration updating request carrying the second communication identification; and
sending (318) a registration service list comprising no service screened out to the client side.

5. The method according to claim 4, wherein the step (S314) of screening out, from the registration service list, services available for directly executing service registration updating comprises:
obtaining a type of each service in the registration service list beginning from a first service in the registration service list;
screening out services with types indicating available for directly executing service registration updating; and
wherein the types are marked according to note information by the client side on the service registration message when services are acquired from service registration messages received from the client side by means of the first communication identification and synchronized with the server side.

6. The method according to claim 4, wherein the step of screening out, from the registration service list, services available for directly executing service registration updating comprises:
obtaining providers of each service in the registration service list beginning from a first service in the registration service list; and
screening out services corresponding to providers in a list available for directly executing service registration updating.

7. The method according to claim 4, wherein the step of updating registration information of the services by using a second communication identification of the client side further comprises:
sending a request confirmation notice to the client side, the request confirmation notice prompting that the service registration updating of the services available for directly executing service registration updating will be executed;
receiving a confirmation instruction on the request confirmation notice from the client side; and
executing, after receiving the confirmation instruction, the step of sending a second service registration updating request to providers of the services screened out.

8. A service registration updating method on a client side, comprising:
monitoring (S410) a trigger event for service registration updating;
sending (S412) a first service registration updating request to a server;
receiving (S414) from the server a registration service list, in which services corresponding to service registration messages received from the client side by means of a first communication identification and synchronized with the server are recorded; and
sending (S416) a second service registration updating request to providers of the services recorded in the registration service list, the second service registration updating request carrying a second communication identification of the client side.

9. The method according to claim 8, wherein the step (S416) of sending a second service registration updating request to providers of the services recorded in the registration service list comprises:
presenting the registration service list;
receiving execution instruction inputted by users; and
sending a second service registration updating request to the providers of the services recorded in the registration service list.

10. The method according to claim 8 or 9, wherein the method further comprises:
receiving a request confirmation notice from the server, the request confirmation notice prompting that the server will execute service registration updating of services available for directly executing service registration updating; and
sending a confirmation instruction on the request confirmation notice to the server.

11. The method according to any one of claims 8 to 9, wherein the method further comprises:
receiving messages by means of the first communication identification;
selecting a message recording services from the messages as a service registration message; and
synchronizing the service registration message with the server by using the first communication identification.

12. A service registration updating device on a server side, comprising:
a receiving module (110), configured to receive a first service registration updating request from a client side;
an acquisition module (112), configured to acquire services registered with a first communication identification of the client side; and
an update module (114), configured to update registration information of the services by using a second communication identification of the client side.

13. The device according to claim 12, wherein the acquisition module (112) is configured to query and acquire a registration service list stored locally and corresponding to the first communication identification by using the first communication identification; the registration service list comprising services acquired from service registration messages received from the client side by means of the first communication identification and synchronized with the server side.

14. The device according to claim 13, wherein the update module (114) is configured to send the registration service list to the client side.

15. The device according to claim 13, wherein the update module (114) comprises:
a screening submodule, configured to screen out services available for directly executing service registration updating from the registration service list;
a first sending submodule, configured to send a second service registration updating request to a provider of the screened out services, the second service registration updating request carrying the second communication identification;
a second sending submodule, configured to send a registration service list comprising no service screened out to the client side.

16. The device according to claim 15, wherein the screening submodule is configured to traverse a type of each service in the registration service list beginning from a first service in the registration service list, and screen out services with types indicating available for directly executing service registration updating; and
wherein the type is marked according to note information by the client side on the service registration message when services are acquired from service registration messages received from the client side by means of the first communication identification and synchronized with the server side.

17. The device according to claim 15, wherein the screening submodule is configured to traverse providers of each service in the registration service list beginning from a first service in the registration service list, and screen out services corresponding to providers in a list available for directly executing service registration updating.

18. The device according to claim 15, wherein the update module (114) further comprises:
a trigger submodule, configured to: send a request confirmation notice to the client side; receive a confirmation instruction on the request confirmation notice from the client side; and trigger the second sending submodule to execute operation after receiving the confirmation instruction;
wherein the request confirmation notice prompts that the service registration updating of the services available for directly executing service registration updating will be executed.

19. A service registration updating device on a client side, comprising:
a monitoring module (210), configured to monitor a trigger event for service registration updating;
a first sending module (212), configured to send a first service registration updating request to a server;
a receiving module (214), configured to receive from the server a registration service list, in which services corresponding to service registration messages received from the client side by means of a first communication identification and synchronized with the server are recorded; and
a second sending module (216), configured to send a second service registration updating request to providers of the services recorded in the registration service list, the second service registration updating request carrying a second communication identification of the client side.

20. The device according to claim 19, wherein the second sending module (216) comprises:
a presentation submodule, configured to present the registration service list;
a receiving submodule, configured to receive execution instruction inputted by users; and
an execution submodule, configured to send, after the execution instruction is received by the receiving submodule, a second service registration updating request to the providers of the services recorded in the registration service list.

21. The device according to claim 19 or 20, wherein the device further comprises:
a notice receiving module, configured to receive a request confirmation notice from the server, the request confirmation notice prompting that the server will execute service registration updating of services available for directly executing service registration updating; and
a confirmation sending module, configured to send a confirmation instruction of the request confirmation notice to the server.

22. The device according to any one of claims 19 to 21, wherein the device further comprises:
a message receiving module, configured to receive messages by means of the first communication identification;
a selection module, configured to select a message having recorded services from the messages as a service registration message; and
a synchronization module, configured to synchronize the service registration message with the server by using the first communication identification.

23. A computer program, including instructions for executing the steps of a service registration updating method according to any one of claims 1 to 7 when said program is executed by a computer.

24. A recording medium readable by a computer and having recorded thereon a computer program including instructions for executing the steps of a service registration updating method according to any one of claims 1 to 7.
